# EUROPEAN PATENT SPECIFICATION

(11) **EP 2 562 271 B1**
(45) Date of publication and mention of the grant of the patent: **29.05.2019**
(21) Application number: 11768441.5
(22) Date of filing: 14.04.2011
(51) Int. Cl.: C21D 8/02, C21D 9/00, C21D 1/22

(54) **AN INTEGRATED PROCESSING METHOD FOR STEEL'S STAMPING AND FORMING**
EIN INTEGRIERTES VERARBEITUNGSVERFAHREN FÜR DAS STEMPELN UND UMFORMEN VON STAHL
UNE MÉTHODE DE TRAITEMENT INTÉGREÉ POUR L'EMBOUTISSAGE ET LA FORMATION DE L'ACIER

(30) Priority: 17.04.2010 CN 201010149293
(43) Date of publication of application: 27.02.2013
(73) Proprietor: Shanghai Jiaotong University, Shanghai 200240 (CN)
(72) Inventor: JIN, Xuejun, Shanghai 200240 (CN); LIU, Heping, Shanghai 200240 (CN); CUI, Zhenshan, Shanghai 200240 (CN); GU, Jianfeng, Shanghai 200240 (CN); HAN, Lizhan, Shanghai 200240 (CN); CHEN, Mingming, Shanghai 200240 (CN)
(74) Representative: Witte, Weller & Partner Patentanwälte mbB
(86) International application number: PCT/CN2011/072806
(87) International publication number: WO 2011/127830

(56) References cited:
- CN-A- 1 566 375
- CN-A- 101 805 821
- JP-A- 3 229 818
- SU-A1- 1 203 116
- US-A- 2 140 670
- US-A1- 2009 007 999
- US-A1- 2010 018 277
- US-A1- 2010 018 277
- TAN HAIYAN: "STUDY AND SIMULATION ON THE HOT STAMPING PROCESS OF AUTOMOTIVE LEAF SPRING", 1 April 2008 (2008-04-01), MASTER'S DEGREE THESIS OF WUHAN UNIVERSITY OF TECHNOLOGY, CN, PAGE(S) 68PP, XP008169216, * abstract *
- TAN HAIYAN: 'STUDY AND SIMULATION ON THE HOT STAMPING PROCESS OF AUTOMOTIVE LEAF SPRING' MASTER'S DEGREE THESIS OF WUHAN UNIVERSITY OF TECHNOLOGY September 2008, pages 25 - 32, XP008169216
- GU ZHENGWEI ET AL.: 'HOT STAMPING PROCESS FOR STAMPING WORKPIECE OF SUPER STRENGTH STEEL SHEET' AUTOMOBILE TECHNOLOGY & MATERIAL no. 4, April 2009, page 15, XP008163896

## Description

The invention relates to a process in the technical field of hot stamping for sheet metals, and more particularly, to an integrated processing method for steel's stamping and forming.

A series of high-strength sheet steels has been developed successively to meet the demand for products with light weight and high reliability in the modern manufacturing industry. At present, the strength of sheet steel used for manufacturing the car body for high-class car is no more than about 1400 MPa.

The Chinese patent application with the document number CN101121955 published on February 13, 2008 has been searched out, and it discloses "a heat treatment process for improving the mechanical performance of quenched steel by carbon partitioning and tempering". In addition, an article, T. Y. Hsu "Quenching-Partitioning-Tempering (Precipitation) (Q-P-T) Process for Ultra-high-strength steel", Heat treatment, Vol. (No.2, 2008), reports a new heat treatment technology adopting a Quenching-Partitioning-Tempering heat treatment technology. The technology involves the following steps: 1) The first step is austenization: heating the steel to above austenization temperature. 2) The second step is quenching: controlling the quenching temperature to be amid of the martensitic finish temperature (Mf) and the martensitic start temperature (Ms) to make the austenite partially transform into the martensite. 3) The third step is partitioning: raising the temperature slightly above the Ms point and keeping it for a short time, which forms a thin layer of austenite with high content of carbon around the martensite lath by repartitioning the carbon between the martensite and the austenite 4) The fourth step is changing the temperature of the steel to a tempering temperature to induce precipitation hardening in the martensite, which further improves the hardness and strength of the martensite. 5) The fifth step is cooling: cooling down the steel from the tempering temperature to the room temperature to transform part of retained austenite into martensite while remain a thin layer of retained austenite with high content of carbon around the martensite lath generated previously (in step 2) to attain the high toughness of the steel. After the Quenching-Partitioning-Tempering treatment, the tensile strength of the medium carbon steel containing silicon and niobium reaches 2100MPa, and the ultimate elongation ratio reaches 11%. Therefore, the Q-P-T process has tremendous promising application in relevant industries.

However, if the cold stamping is performed after the Q-P-T treatment, the high strength of the sheet material results in short lifespan of the blanking die and cold forming die (such as the drawing die and cold stamping die), and if the cold stamping is performed before the Q-P-T treatment, the dimensional precision of the stamped piece cannot be maintained due to the heat treatment distortion, and the advantages of the cold stamping are eliminated. Therefore, the disadvantages of the above technologies make them unsuitable for mass production with the sheet steels as raw material. It cannot meet the demand for mass production such as vehicle body manufacturing.

Tan Haiyan: "Study and Simulation on the Hot Stamping Process of Automotive Leaf Spring", 1 April 2008, Master's Degree Thesis of Wuhan University of Technology, CN, Page(s) 68 pp. discloses a thermal forming process of steel spring plate with the following steps:
(1) In a first step, there is selected and prepared a steel blank by drilling, corner cutting etc. in the cold state;
(2) This is followed by a second step, wherein the blanks are hot formed;
(3) Thereafter the blanks are quenched in oil or water; the quenching shall end at a temperature of 100 to 150 °C when the blanks are removed from the quenching bath, so that the structure is martensite and the hardness is HRC 55 to 60;
(4) In the forth step the blanks are tempered at medium temperature at 450 to 500 °C for 4 minutes;
(5) This is followed by hydro-cooling to form surface pressure stress and increase fatigue strength. The hardness after quenching is HRC 38 to 42.

In view of this it is an object of the invention to disclose an improved integrative treating process for punching steel leading to improved strength of the material, precise plastic deformation and savings of energy.

This object is solved by a method according to claim 1.

According to the invention there is provided a processing method integrating sheet steel hot stamping and controllable quenching together, which combines the hot stamping and heat treatment to simultaneously improve the strength of material and ensure precise plastic deformation of the steel, as well as to save energy.

The invention includes the following technical scheme and steps.

The first step is selecting and preparing a steel blank: blanking or cutting a steel plate, a steel sheet or a section beam in the cold state to make the steel blank.

The said blanking includes the punching using a cutting die, a blanking die or a knife-edge die.

The second step is hot stamping process: heating the steel blank to an austenization temperature and hot stamping it.

The said heating means heating under vacuum or in protective atmosphere using a resistance furnace or a fuel furnace.

The third step is quenching with a controlled cooling temperature: quenching the hot stamped steel blank.

The said quenching means setting the cooling temperature T1 as follows: Mf≤T1≤Ms, wherein the range of Ms is given as follows: 200°C <Ms≤500°C, and the range of Mf is given as follows: 50°C ≤Mf≤200°C, thus to transform 50% to 90% austenite to martensite.

The fourth step is partitioning-tempering operation: reheating the cooled steel blank, then lowering the temperature to the tempering temperature to perform the tempering heat treatment and performing the fine stamping at the same time.

The said reheating means positioning the steel blank in a salt-bath furnace, a fluidized bed furnace or an air heating furnace, raising the temperature to a heating temperature T2, 100°C ≤T2≤500°C, and keeping the temperature for 10 to 900 seconds.

The said tempering heat treatment means positioning the steel blank obtained after the reheating treatment in a salt-bath furnace, a fluidized bed furnace or an air heating furnace, and performing the tempering treatment at a temperature T3, wherein the range of the tempering temperature T3 is given as follows: 100°C ≤T3≤500°C.

According to the different requirement of products, the above process may be simplified in the actual operation procedure, and the quenching temperature may equal to the temperature of the reheating treatment and the temperature of the tempering heat treatment, that is, T1=T2=T3 or T1≠T2=T3, etc.

The advantages of the invention are described as follows.
1) Since the blanking and punching are performed when the sheet steel is in an unhardened state before the heat treatment, so that the mass production may be achieved by using common blanking and punching method as used for common material.
2) The hot stamping and the controllable quenching heat treatment are combined. In the austenite state, the deformation resistance is small, and plastic forming with large deformation can be performed. After the forming step, the quenching is performed directly without reheating, which saves energy and avoids distortion due to temperature change.
3) After the temperature-controlled processes of quenching, partitioning and tempering, the steel still has a certain quantity of austenite, so that it remains plastic deformation ability to some extent. The followed fine stamping takes this advantage and ensures the final precision of the shape. Through the reasonable combination of hot stamping and heat treatment, the technology simultaneously obtains the same material strength as that obtained via the quenching-partitioning-tempering process and the workpiece precision as well. Therefore, the technology is of great promising to application in mass industrial production and achievement of substantial technical progress.

The embodiments of the invention are described in detail hereinbelow, and they are performed on the premise of the technical scheme of the invention. The embodiments provide the detailed implementing steps and specific operating procedures. However, the protection scope of the invention is not limited to the following embodiments.

### Embodiment 1: the manufacture of helmet with super high strength

A 1 mm thick cold rolled steel sheet with the thickness made of the medium carbon steel containing silicon and niobium is selected as material. In the state as it is provided, the cold rolled sheet is blanked using the friction press and cut to make the sheet blank of the helmet. The sheet blank is heated via a mesh belt heating furnace, and it lies on the mesh belt at the feed-in end of the mesh belt furnace and conveyed into the furnace by the mesh belt to be heated. The temperature of the furnace is controlled at 840°C to complete austenitizing the steel sheet blank. The atmosphere nitrogen and methanol is introduced into the furnace to protect it. After the sheet blank is out of the furnace, it is transferred to the hot stamping machine by a manipulator quickly to be stamped. The hot stamping machine has three working stations. The first working station is drawing, the second one is shaping, and the third one is trimming. After the hot stamping, the helmet is immediately soaked into the nitrate bath at the temperature of 210°C. After the work piece stays therein for 3 minutes, the temperature of the work piece has been lowered to 210°C. Thus, the moderate-cold quenching is completed, and the partitioning operation is performed quickly. The helmet is transferred to a nitrate furnace at the temperature of 400°C from the moderate-cold isothermal nitrate tank and kept for 1.5 minutes. Afterwards, it is transferred to a fluidized bed furnace at the temperature of 410°C to perform the tempering treatment. The tempering treatment lasts for 15 minutes. After the tempering treatment, the fine stamping and shaping is performed immediately when it is still hot. The fine stamping and shaping is performed via the friction press of 100 tons. Thus, the helmet meets the requirement for shape, size and tensile strength of the products.

### Embodiment 2: car door

The cold rolled steel sheet made of the medium carbon steel containing silicon and niobium is selected as material. The sheet with thickness of 1.2 mm is used to make the car door via the following operations.

Operation 1 is blanking and punching: blanking and punching using the press in the cold state to cut it to make the sheet blank of the car door.

Operation 2 is austenitizing: heating the sheet blank of the car door to the austenitization temperature of 840°C by a roller type heating furnace, and introducing the protective atmosphere nitrogen and methanol into the furnace to avoid surface oxidation and decarburization of the sheet blank.

The operation 3 is hot stamping: after finishing the heating operation and taking the sheet blank out of the roller type heating furnace, transferring the sheet blank to the stamping press immediately by the manipulator to punch the sheet blank in the austenite state to form the shape of the car door.

The operation 4 is moderate-cold quenching-partitioning: after the hot stamping operation, putting the car door into the fluidized bed at the temperature of 250°C quickly by the manipulator to quench it, keeping it for 5 minutes to low the temperature of the car door to the temperature of the quenching, and completing the partitioning operation at the same time.

The operation 5 is tempering: taking the car door out of the fluidized bed at the partitioning temperature and transferring it into a tempering furnace to temper it at the tempering temperature of 250°C, wherein the tempering furnace is an air furnace equipped with a stirring blower and using electricity for heating, and the tempering operation lasts for 20 minutes.

The operation 6 is fine stamping: after the tempering operation, taking the car door out of the tempering furnace and putting it into the fine-stamping die directly by the manipulator to perform the fine stamping when it is still hot.

### Embodiment 3: thin-walled beam

The length and width of the beam are respectively 4250mm and 250mm, the height of side walls is 120mm, and a hole with a diameter of 120mm is punched on each of the two ends. The section beam is made from plate of medium carbon steel containing silicon and niobium and the thickness is 5mm. The beam is produced as follows.

The operation 1 is blanking and punching: punching to make the plate blank of the beam in the cold state using a knife-edge die or blanking die, and making the circular holes at the two ends by laser cutting process.

The operation 2 is austenitizing: heating the plate blank of the beam in a through-type heating furnace, wherein the stepping or chain plate type driving mechanism passes through the whole furnace chamber and extends from the feed-in furnace door to the feed-out furnace door at the two ends, and the steel blank is lain on the driving mechanism, driven into the furnace from the feed-in port by the driving mechanism to pass through the furnace, and heated to the austenitization temperature of 850°C.

The operation 3 is hot stamping: transferring the steel blank to a forming die of a stamping machine immediately by the manipulator to be punched after it is out of the furnace.

The operation 4 is moderate-cold quenching: after the hot stamping operation, quenching the beam immediately, and cooling it down in the aqueous polymer solutions for 2 seconds firstly, and then transferring it to the fluidized bed at the temperature of 200°C and remaining for 5 minutes.

The operation 5 is partitioning: transferring the beam to a partitioning heating fluidized bed at the temperature of 400°C immediately and remaining for 150 seconds after the beam remains in the moderate-cold fluidized bed for the set time period.

The operation 6 is tempering: after remaining for 150 seconds, transferring the beam to a tempering furnace at the temperature of 400°C immediately, wherein the tempering lasts for 30 minutes, and the tempering furnace is an air furnace using electricity for heating and equipped with stirring blower therein.

The operation 7 is fine stamping: after the tempering operation, taking the beam out of the tempering furnace and putting it on a precision die to punch it immediately when it is still hot, thereby the distortion produced during the quenching is modified, and the fine stamping cools the beam to the room temperature.

### Embodiment 4: front fender

The cold rolled steel sheet made of the medium carbon steel containing boron is selected as material. The sheet with thickness of 1.0mm is used to make the front fender of a car via the following operations.

Operation 1 is blanking and punching: blanking using the press in the cold state to cut it to make the sheet blank of the front fender.

Operation 2 is austenitizing: heating the sheet blank of the front fender to the austenitization temperature of 900°C using a roller type heating furnace, and introducing the protective atmosphere nitrogen and methanol into the furnace to avoid surface oxidation and decarburization of the sheet blank.

The operation 3 is hot stamping: after finishing the heating operation and taking the sheet blank out of the roller type heating furnace, transferring the sheet blank to a stamping press immediately by the manipulator to punch the sheet blank in the austenite state to form the shape of the front fender.

The operation 4 is moderate-cold quenching-partitioning: after the hot stamping operation, putting the front fender into the fluidized bed at the temperature of 300°C by the manipulator immediately to quench it and remaining for 10 to 60 seconds to finish the partitioning operation at this quenching temperature for the front fender.

The operation 5 is tempering: taking the front fender out of the fluidized bed at the partitioning temperature and transferring it to a tempering furnace to temper it at the tempering temperature of 350°C, wherein the tempering furnace is an air furnace equipped with a stirring blower and using electricity for heating, and the tempering operation lasts for 120 seconds.

The operation 6 is fine stamping: after the tempering operation, taking the front fender out of the tempering furnace and putting it into a fine-stamping die directly by the manipulator to perform the fine stamping.

## Claims

1. An integrated processing method for sheet steel hot stamping and heat treatment, **characterized in that** the method comprises the steps of:
the first step, selecting and preparing a steel blank: punching or cutting a steel plate, a steel sheet or a section bar in a cold state to make the steel blank;
the second step, hot stamping treatment: heating the steel blank to an austenitizing temperature and hot stamping it;
the third step, quenching with a controlled cooling temperature: quenching the hot stamped steel blank;
the fourth step, partitioning operation: reheating the cooled steel blank, then lowering the temperature to a tempering temperature, and performing fine stamping at the same time;
wherein the quenching involves setting a cooling temperature T1 as follows: Mf≤T1≤Ms, wherein the range of Ms is given as follows: 200°C ≤Ms≤500°C, and the range of Mf is given as follows: 50°C ≤Mf≤200°C, thus to transform 50% to 90% austenite to martensite;
wherein the reheating treatment involves positioning the steel blank in a salt-bath furnace, a fluidized bed furnace or an air heating furnace, raising the temperature to a heating temperature T2, 100°C ≤T2≤500°C, and keeping the temperature for 10 to 900 seconds; and
wherein the tempering heat treatment involves positioning the steel blank obtained after the reheating treatment in a salt-bath furnace, a fluidized bed furnace or an air heating furnace, and performing the tempering treatment at a temperature T3, wherein the range of the tempering temperature T3 is 100°C ≤T3≤500°C.

2. The integrated processing method for sheet steel hot stamping and heat treatment according to claim 1, **characterized in that** the punching comprises punching using a cutting die, a blanking die or a knife-edge die.

3. The integrated processing method for sheet steel hot stamping and heat treatment according to claim 1, **characterized in that** the heating involves heating under vacuum or in protective atmosphere using a resistance furnace or a fuel furnace.

4. The integrated processing method for sheet steel hot stamping and heat treatment according to claim 1, **characterized in that** the cooling temperature of the quenching equals to the reheating temperature and the tempering temperature.

## Patentansprüche

1. Ein integriertes Verarbeitungsverfahren zum Heißstanzen von Stahlblech und zur Wärmebehandlung, **dadurch gekennzeichnet, dass** das Verfahren die folgenden Schritte aufweist:
als ersten Schritt das Selektieren und Vorbereiten eines Rohbleches: das Stanzen oder Schneiden einer Stahlplatte, eines Stahlblechs oder einer Abschnittsstange in einem kalten Zustand, um den Rohstahl herzustellen;
den zweiten Schritt, die Heißstanzbehandlung: das Heizen des Rohstahls auf eine Austenitisierungstemperatur und das Heißstanzen;
den dritten Schritt, das Abschrecken mit einer gesteuerten Kühltemperatur: das Abschrecken des heißgestanzten Rohstahls;
den vierten Schritt, den Partitioniervorgang: das Wiederaufheizen des abgekühlten Rohstahls, dann das Absenken der Temperatur auf eine Tempertemperatur und das Durchführen eines Feinstanzens zur gleichen Zeit;
wobei das Abschrecken das Einstellen einer Kühltemperatur T1 wie folgt umfasst: Mf ≤ T1 ≤ Ms, wobei der Bereich von Ms gegeben ist wie folgt: 200 °C ≤ Ms ≤ 500 °C, und wobei der Bereich von Mf wie folgt gegeben ist: 50 °C ≤ Mf ≤ 200 °C, um so 50 bis 90 % Austenit in Martensit umzuwandeln;
wobei die Wiederaufheizbehandlung das Positionieren des Rohstahls in einem Salzbadofen, in einem Wirbelschichtofen oder einem Heißluftofen umfasst, das Anheben der Temperatur auf eine Heiztemperatur T2, mit 100 °C≤T2≤500 °C, sowie das Halten der Temperatur für 10 bis 900 Sekunden;
wobei das Durchführen der Temperbehandlung das Positionieren des nach der Wiederaufheizbehandlung erhaltenen Rohstahls in einem Salzbadofen, in einem Wirbelschichtofen oder einem Heißluftofen umfasst, und das Durchführen der Temperbehandlung bei einer Temperatur T3, wobei der Bereich der Tempertemperatur T3 100 °C ≤ T3 ≤ 500 °C ist.

2. Das integrierte Verarbeitungsverfahren zum Heißstanzen von Stahlblech und die Heizbehandlung nach Anspruch 1, **dadurch gekennzeichnet, dass** das Stanzen ein Stanzen unter Verwendung einer Schneidmatrize, einer Trennmatrize oder einer Messerkantenmatrize umfasst.

3. Das integrierte Verarbeitungsverfahren zum Heißstanzen von Stahlblech und die Heizbehandlung nach Anspruch 1, **dadurch gekennzeichnet, dass** das Heizen ein Heizen unter Vakuum oder in einer Schutzatmosphäre unter Verwendung eines Widerstandsofens oder eines Brennstoffofens umfasst.

4. Das integrierte Verarbeitungsverfahren zum Heißstanzen von Stahlblech und die Heizbehandlung nach Anspruch 1, **dadurch gekennzeichnet, dass** die Kühltemperatur des Abschreckens gleich der Wiederaufheiztemperatur und der Tempertemperatur ist.

## Revendications

1. Procédé de transformation intégré pour l'estampage à chaud et le traitement thermique d'acier sous forme de tôle, **caractérisé en ce que** le procédé comprend les étapes suivantes :
première étape, la sélection et la préparation d'un flan en acier : le poinçonnage ou le découpage d'une plaque d'acier, d'une tôle d'acier ou d'une barre profilée à froid pour former le flan en acier ;
deuxième étape, le traitement d'estampage à chaud : le chauffage du flan en acier à une température d'austénitisation et l'estampage à chaud de celui-ci ;
troisième étape, la trempe avec une température de refroidissement contrôlée : la trempe du flan en acier estampé à chaud ;
quatrième étape, l'opération de ségrégation : le réchauffage du flan en acier refroidi, puis l'abaissement de la température à une température de revenu et la mise en oeuvre d'un estampage fin en même temps ;
dans lequel la trempe comporte le réglage d'une température de refroidissement T1 de la façon suivante : Mf ≤ T1 ≤ Ms, la plage de Ms étant donnée comme étant la suivante : 200 °C ≤ Ms ≤ 500 °C et la plage de Mf étant donnée comme étant la suivante : 50 °C ≤ Mf ≤ 200 °C, pour transformer ainsi 50 % à 90 % de l'austénite en martensite ;
dans lequel le traitement de réchauffage comporte la disposition du flan en acier dans un four à bain de sel, un four à lit fluidisé ou un four de chauffage à air, l'élévation de la température à une température de chauffage T2, 100 °C ≤ T2 ≤ 500 °C, et le maintien de la température pendant 10 à 900 secondes ; et
dans lequel le traitement thermique de revenu comporte la disposition du flan en acier obtenu après le traitement de réchauffage dans un four à bain de sel, un four à lit fluidisé ou un four de chauffage à air et la mise en oeuvre du traitement de revenu à une température T3, la plage de la température de revenu T3 étant 100 °C ≤ T3 ≤ 500 °C.

2. Procédé de transformation intégré pour l'estampage à chaud et le traitement thermique d'acier sous forme de tôle selon la revendication 1, **caractérisé en ce que** le poinçonnage comprend un poinçonnage à l'aide d'une matrice de découpage, d'un emporte-pièce ou d'une matrice à tranchant.

3. Procédé de transformation intégré pour l'estampage à chaud et le traitement thermique d'acier sous forme de tôle selon la revendication 1, **caractérisé en ce que** le chauffage comporte un chauffage sous vide ou dans une atmosphère protectrice à l'aide d'un four à résistance ou d'un four à combustible.

4. Procédé de transformation intégré pour l'estampage à chaud et le traitement thermique d'acier sous forme de tôle selon la revendication 1, **caractérisé en ce que** la température de refroidissement de la trempe est égale à la température de réchauffage et à la température de revenu.
